# EUROPÄISCHE PATENTANMELDUNG

(11) **EP 1 564 051 A2**
(43) Veröffentlichungstag der Anmeldung: **17.08.2005**
(21) Anmeldenummer: 05002321.7
(22) Anmeldetag: 03.02.2005
(51) Int. Cl.: B60J 7/043, B60J 7/11

(54) **Öffnungsfähiges und abnehmbares Fahrzeugdach**

(30) Priorität: 11.02.2004 DE 102004006736
(71) Anmelder: ArvinMeritor GmbH, 63128 Dietzenbach (DE)
(72) Erfinder: Grimm, Rainer, 60299 Frankfurt (DE); Becher, Thomas, 63110 Rodgau (DE); Böhm, Horst, 60599 Frankfurt (DE); Oechel, Holger, 60388 Frankfurt (DE)
(74) Vertreter: Kitzhofer, Thomas, Dipl.-Ing.

(57) **Zusammenfassung**

Ein öffnungsfähiges Fahrzeugdach mit einem verfahrbaren Deckel (8) hat im Bereich des Mittelholms (18) den zentralen Antrieb für den Deckel (8). An den Seitenrändern (46) des Deckels (8) sind den Deckel (8) verstärkende Holme angebracht, die die Fahrzeugdachholme (12, 16) fortsetzen.

## Beschreibung

Die Erfindung betrifft ein öffnungsfähiges Fahrzeugdach, mit wenigstens einem wahlweise verfahrbaren Deckel zum wahlweisen Öffnen und Schließen einer Dachöffnung, einem in Fahrzeugmitte verlaufenden, die Dachöffnung in zwei Hälften teilenden Mittelholm mit dem Antrieb für den Deckel.

Derartige Fahrzeugdächer können auch als Spoilerdächer mit Mittelantrieb bezeichnet werden. Der Deckel wird nicht an seinen zwei Seitenrändern, sondern nur im Bereich der Mitte angetrieben, und zwar längs des sogenannten Mittelholms. Diese Art von Fahrzeugdächern eignen sich insbesondere für Roadster.

Aufgabe der Erfmdung ist es, ein Fahrzeugdach zur Verfügung zu stellen, das eine hohe Stabilität aufweist und dennoch eine flächenmäßig große Dachöffnung.

Dies wird bei einem Fahrzeugdach der eingangs genannten Art dadurch gelöst, daß an den in Fahrzeuglängsrichtung gesehenen Längsrändern des Deckels seitlichen Fahrzeugdachholme fortsetzende verstärkende Holme angebracht sind. Die Verstärkungsholme schließen an die Dachholme, die am fahrzeugfesten Teil des Daches vorgesehen sind, an und stabilisieren den Deckel, der eine größere Breite aufweist als bisherige Deckel. Die Breite kann dadurch erhöht werden, daß das Fahrzeugdach seitlich des Deckels einen schmäleren, oder gemäß der bevorzugten Ausführungsform, überhaupt keinen Dachholm hat.

Ganz besonders vorteilhaft ist die Erfindung im Zusammenspiel mit fensterrahmenlosen Türen. Dann ergibt sich ein cabrioartiges Fahrgefühl, wenn der Deckel nach hinten verschoben wird, denn die Sicht nach oben wird durch keinen oberen Seitenscheibenrahmen unterbrochen.

Die Seitenscheiben liegen damit unmittelbar am Deckel an, der hier vorzugsweise entsprechende Fensterdichtungen aufweist.

Bei der Erfindung ist vorgesehen, daß der Deckel eine die Außenhaut ergänzende, flächige Außenwand hat, die vorzugsweise ein Glas oder Kunststoff mit einer der Außenhaut angepaßten Wölbung ist. Die Außenwand ist gemäß der Erfmdung im Bereich der Seitenränder, vorzugsweise nur hier, hinterschäumt oder hinterspritzt. Die Hinterschäumung oder Hinterspritzung erhöht die Stabilität und ermöglicht es, die Holme und gegebenenfalls die Dichtungen leicht zu integrieren.

Die Holme, die aus Metall, vorzugsweise aus abgewinkelten Metallblechen, sind, können sehr einfach in die Hinterschäumung oder Hinterspritzung eingebettet werden, so daß keine aufwendige Montage der Holme am gewölbten Glasdekkel notwendig ist.

Das erfindungsgemäße Fahrzeugdach kann mit einem Deckel ausgeführt sein, der eine werkzeuglos abnehmbare Einheit bildet. Der Deckel kann also einerseits verfahren, andererseits auch komplett vom Dach entfernt werden, um beispielsweise hinter den Sitzen oder im Kofferraum verstaut zu werden.

Der Deckel und der Mittelholm (gegebenenfalls samt Antrieb) können ebenfalls als gemeinsame, werkzeuglos abnehmbare Einheit ausgebildet sein, so daß im herausgenommenen Zustand des Deckels nicht einmal der Mittelholm die Sicht nach oben einschränkt.

Im Gegensatz zu einem herkömmlichen Spoilerdach mit Mittelantrieb sieht die Erfindung vor, an allen vier Ecken des Deckels Verriegelungen mit einem ortsfesten Abschnitt des Fahrzeugdachs vorzusehen. "Ortsfest" bedeutet in diesem Zusammenhang "nicht verfahrbar". Damit soll sich eine hohe Stabilität des Fahrzeugdachs und somit des Fahrzeugs im geschlossenen Zustand einstellen.

Wenn im Bereich der hinteren Ecken seitliche Führungen zur Koppelung der Ecken mit einem ortsfesten Abschnitt des Fahrzeugdachs vorgesehen sind, erhöht dies die Lagestabilität des ausgestellten und verfahrenen Deckels.

Um die Einheit aus Deckel oder Deckel und Mittelholm werkzeuglos vom Dach entfernen zu können, sollten auch die Führungen werkzeugfrei entriegelbar ausgeführt sein.

In diesem Zusammenhang ist unter anderem angedacht, die Führungen als in Schienen laufende aufstellbare Hebel auszuführen.

Der Deckel, der Mittelholm und ein sich in Fahrzeugslängsrichtung an den Deckel anschließender, ortsfester Abschnitt des Fahrzeugdachs bilden gemäß der bevorzugten Ausführungsform eine vormontierte Dachmoduleinheit, die auf den abschnittsweise vorgesehenen Dachrahmen aufgesetzt und an ihm bleibend befestigt wird, insbesondere durch Kleben.

Weitere Merkmale und Vorteile der Erfmdung ergeben sich aus der nachfolgenden Beschreibung und aus den nachfolgenden Zeichnungen, auf die Bezug genommen wird. In den Zeichnungen zeigen:
- Figur 1 eine perspektivische Ansicht eines erfindungsgemäßen Fahrzeugdachs mit geschlossener Dachöffnung,
- Figur 2 eine perspektivische Ansicht des Fahrzeugdachs nach Figur 1 im vollständig geöffneten Zustand des Dachs,
- Figur 3 eine Unteransicht des erfindungsgemäßen Dachs,
- Figur 4 eine perspektivische Ansicht des erfindungsgemäßen Dachs bei ausgestelltem, zurückgefahrenem Deckel im Bereich der hinteren linken Ecke des Deckels,
- Figur 5 eine Ansicht von schräg unten im Bereich des hinteren linken Ecks des Deckels, wenn dieser verriegelt ist,
- Figur 6 eine perspektivische Ansicht auf das Fahrzeugdach im Bereich des hinteren Endes des Mittelholms,
- Figur 7 eine perspektivische Ansicht des Antriebs im Bereich des Mittelholms,
- Figur 8 eine Schnittansicht durch das Fahrzeugdach und das angrenzende Seitenfenster, quer zur Fahrzeuglängsachse geschnitten, und
- Figur 9 bis 12 schematische Längsschnittansichten durch das Fahrzeugdach zu verschiedenen Phasen beim Ausbau des Deckels.

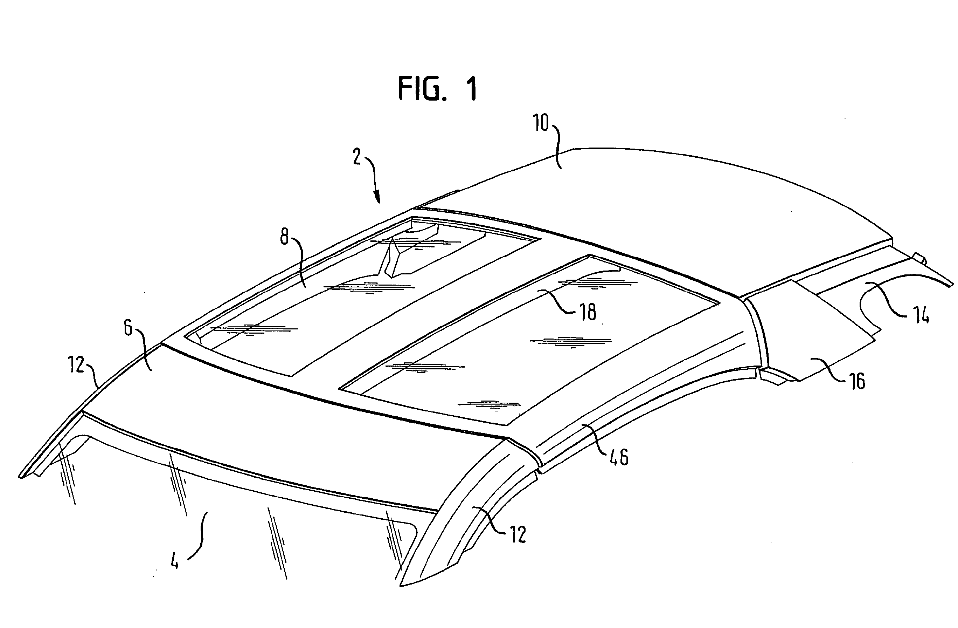

In Figur 1 ist ein Dachbereich eines Fahrzeugs, genauer gesagt eines Roadsters, dargestellt. Das dargestellte Fahrzeugdach ist ein als separate Einheit hergestelltes Dachmodul 2, das öffnungsfähig ist. Das Modul weist einen sich an die Frontscheibe 4 anschließenden, ortsfesten vorderen Abschnitt 6, einen sich in einer Fahrzeuglängsrichtung daran anschließenden, wahlweise verfahrbaren Deckel 8 und einen sich wiederum an den Deckel 8 anschließenden, großflächigen, ortsfesten hinteren Abschnitt 10 auf. Die Außenseiten der Abschnitte 6, 10 und des Deckels 8 bestimmen die Außenhaut des Fahrzeugs im Dachbereich.

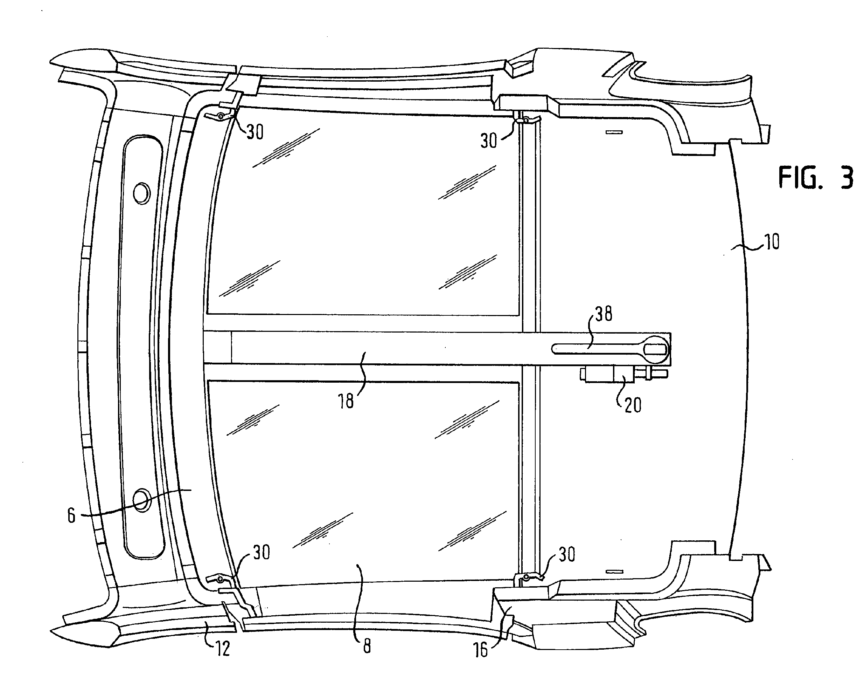

Das Dachmodul 2 ist auf einem Dachrahmen befestigt. Der Dachrahmen hat zwei vordere seitliche Dachholme 12, die jedoch am Deckel 8 enden, und anschließend an den Deckel 8 zwei hintere Dachholme 14, die in die B-Säule 16 zum Teil übergehen. Die vorderen Dachholme 12 enden mit freien Stegen zum Deckel 8 hin (siehe auch Figur 3).

Die Abschnitte 6 und 10 des Fahrzeugdachs sind mit den Dachholmen 12, 14 und entsprechenden, nicht näher zu bezeichnenden Querholmen durch Kleben nicht lösbar und bleibend verbunden.

Beim dargestellten Fahrzeugdach handelt es sich um eine Sonderform eines öffnungsfähigen Dachs, denn im Gegensatz zur herkömmlichen Schiebe- oder Schiebe-Hebedächern wird der Deckel 8 nicht an seinen beiden Seitenrändern angetrieben, sondern nur in der Fahrzeugmitte. Hierzu ist ein Mittelholm 18 vorgesehen, der sich vom vorderen Abschnitt 6 bis zum hinteren Abschnitt 10 erstreckt und an diesen Abschnitten 6, 10 lösbar befestigt ist. Der Mittelholm 18 trägt im Bereich seines hinteren Endes (siehe Figur 3) einen Elektroantrieb 20, der einen Zahnriemen 22 antreibt, welcher sich bis zum vorderen Ende des Mittelholms 18 erstreckt. Der Zahnriemen 22 ist mit dem Deckel 8 gekoppelt, so daß auf Bewegung des Zahnriemens 22 hin der Deckel 8 in Fahrzeuglängsrichtung verfahrbar ist.

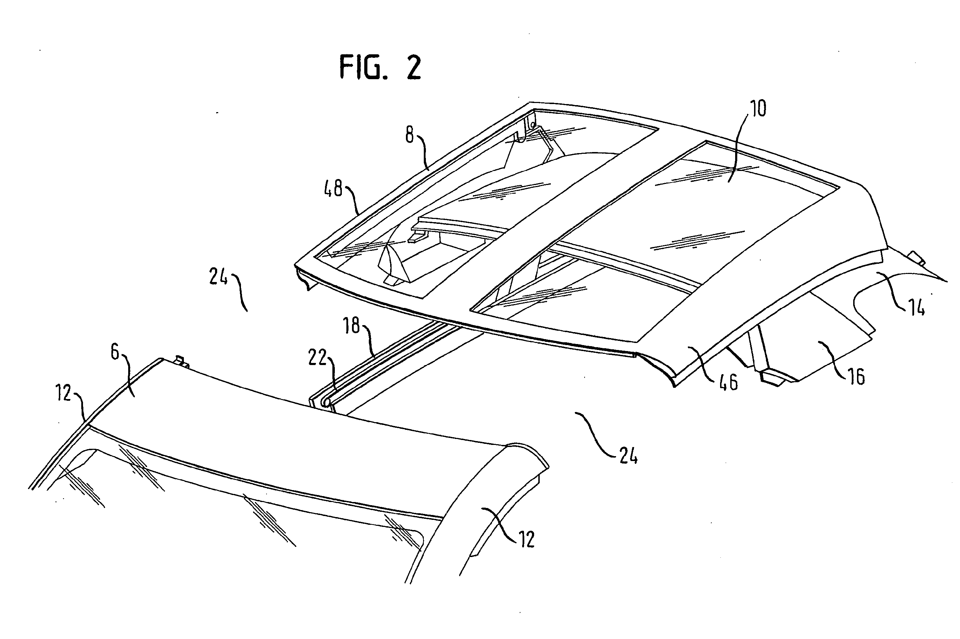

Zum Öffnen des Deckels 8 wird dieser zuerst im Bereich seines hinteren Randes angehoben, um anschließend über den hinteren Abschnitt 10 verfahren zu werden (siehe Figur 2), so daß eine Dachöffnung 24 freigelegt wird, welche durch den Mittelholm 18 geteilt wird.

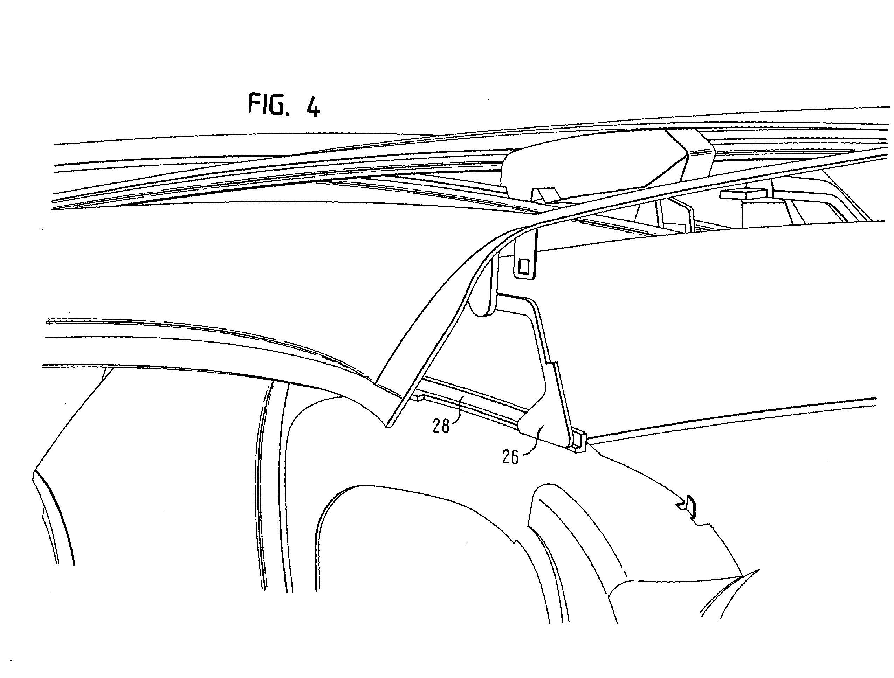

Zur optimalen Führung des Deckels 8 beim Verfahren sind im Bereich seiner hinteren Ecken seitliche Führungen vorgesehen. Dabei handelt es sich um ausstellbare Hebel 26 (siehe Figur 4), die schwenkbar mit dem Deckel 8 verbunden sind und in Schienen 28 längsverschieblich gelagert sind. Die Schienen 28 sind in den Seitenrändern des hinteren Abschnitts 10 ausgeformt. Der Abschnitt 10 ist, wie bereits zuvor erläutert, ein ortsfester Abschnitt des Fahrzeugdachs.

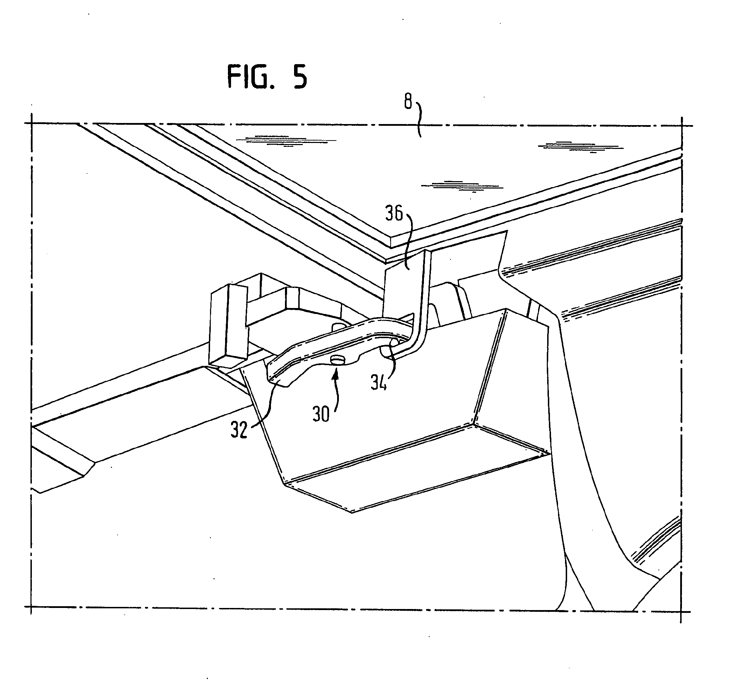

Im geschlossenen Zustand des Fahrzeugdachs ist der Deckel 8 an allen vier Ecken mittels Verriegelungen 30 am übrigen Teil des Dachs befestigt. Dies erhöht die Stabilität des Fahrzeugdachs durch die Einbindung des Deckels 8 in kraftübertragender Beziehung zu den benachbarten Teilen. Eine der Verriegelungen 30 ist in Figur 5 näher dargestellt. Auf der Unterseite des hinteren Abschnitts 10 (für die vorderen Verriegelungen 30 am vorderen Abschnitt 6) sind verschwenkbare zweiarmige Hebel 32 angebracht. Der vordere Arm jedes Hebels 32 ist seitlich abgekröpft und dringt in eine schlaufenartige Öffnung 34 verriegelnd ein, die Teil einer nach unten abgewinkelten Blechlasche 36 ist, die wiederum fest mit dem Deckel 8 verbunden ist.

Die Verriegelungen 30 können manuell, mechanisch (z.B. über Federkraft) oder motorisch geschlossen und/oder geöffnet werden. Zur Verschiebung des Deckels 8 müssen sie geöffnet werden.

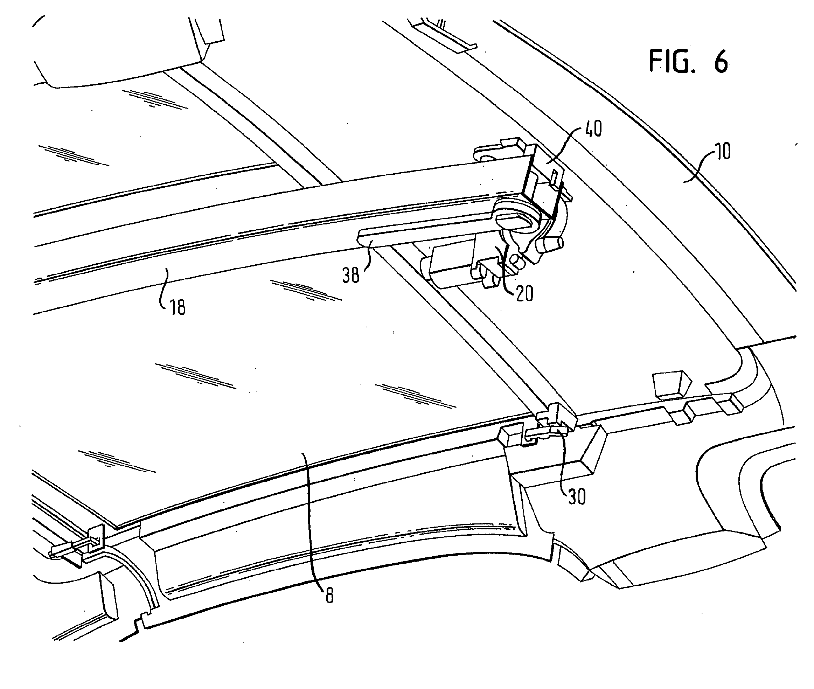

Der Deckel 8 bildet zusammen mit dem Mittelholm 18 und dem an ihm befestigten Antrieb 20 eine abnehmbare Einheit, die ohne Einsatz von Werkzeugen vom Fahrzeugbenutzer schnell und problemlos vom Rest des Fahrzeugdachs entfernt werden kann. Hierzu ist auf der Unterseite des Mittelholms 18 im Bereich des hinteren Endes ein um 90 Grad schwenkbarer Entriegelungshebel 38 vorgesehen. In der in Figur 3 gezeigten Stellung ist der Hebel 38 in der verriegelten Stellung, das heißt der Mittelholm 18 ist spielfrei mit dem hinteren Abschnitt 10 verbunden. Die Verriegelung erfolgt beispielsweise über nicht dargestellte Gleitsteine an einem Fortsatz 40 an der Unterseite des hinteren Abschnitts 10 (siehe Figur 6).

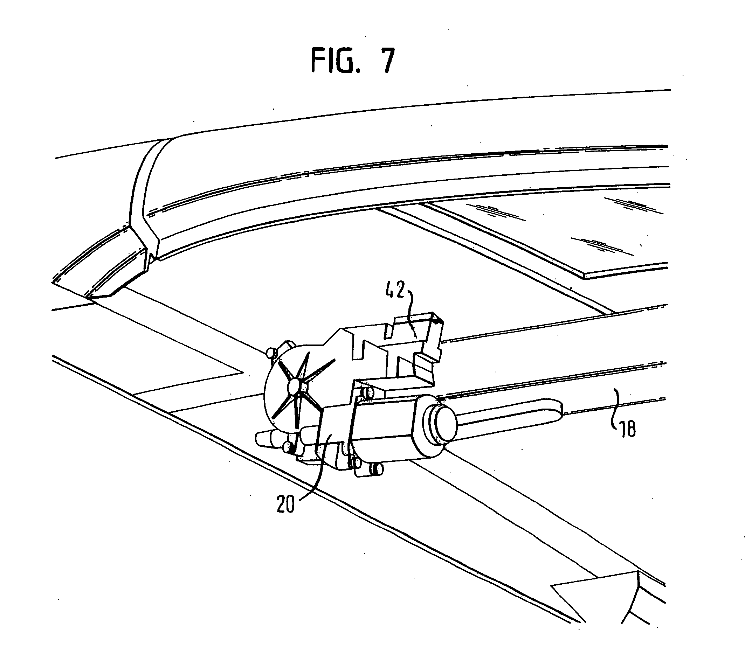

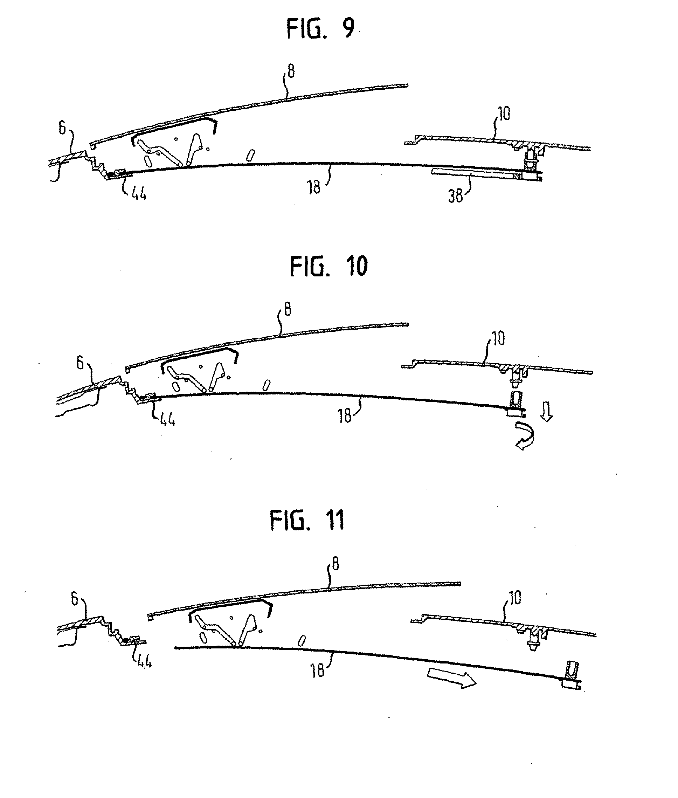

Zum Ausbau des Deckels 8 samt Mittelholm 18 muß der Deckel 8 zuerst in die sogenannte Lüfterstellung verfahren werden, in der der hintere Rand des Deckels 8 angehoben ist (siehe Figur 9). Anschließend wird der Hebel 38 um 90 Grad verdreht (siehe Figur 10), so daß er vom hinteren Abschnitt 10 entkoppelt wird. Da der Antrieb 20 seine Stromversorgung über Leitungen erhält, die auf der Unterseite des hinteren Abschnitts 10 verlaufen, ist zwischen dem Antrieb 20 und dem hinteren Abschnitt 10 eine leicht entkoppelbare elektrische Steckverbindung 42 vorgesehen (siehe Figur 7).

Nach dem Verschwenken des Hebels 32 können der Mittelholm 18 samt des Antriebs 20 etwas nach unten gekippt werden (siehe Figur 10). Am vorderen Ende des Mittelholms 18 ist dieser in einer kurzen Holmführung 44 aufgenommen, die wiederum von dem vorderen Abschnitt 6 nach unten vorsteht und mit diesem verbunden ist. Im nun folgenden Demontageschritt, der in Figur 11 dargestellt ist, wird der Deckel in Pfeilrichtung etwas nach hinten gezogen, so daß der Mittelholm 18 aus seiner Holmführung 44 herausgezogen wird.

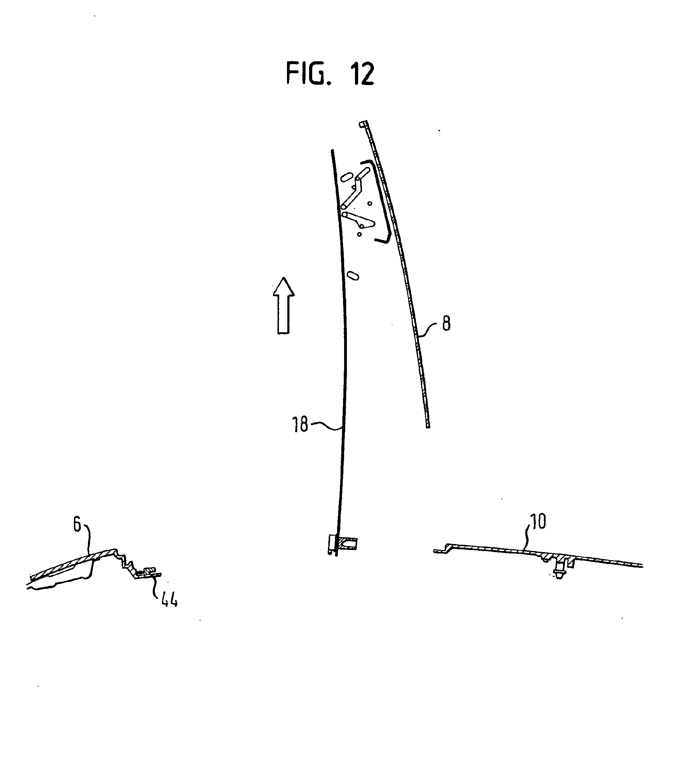

Schließlich wird die ausfahrbare Einheit nach oben aus dem Fahrzeug herausgeschwenkt (siehe Figur 12), wobei bei diesem Schritt die Hebel 32 auch aus den Schienen 28 gezogen werden.

Eine Besonderheit des dargestellten Fahrzeugdachs ist die extrem große Dachöffnung 24, die sich beim Verfahren des Deckels 8 ebenso wie nach dem Ausbau des Deckels 8 ergibt. Dies wird durch eine besondere Konstruktion von Deckel 8 und Dachholmen erreicht. Wie insbesondere in den Figuren 1 und 2 dargestellt ist, besitzt das Dach nämlich im Bereich seitlich des Deckels 8 keine Dachholme. Die vorderen Dachholme 12 werden vielmehr durch die stabilen Seitenränder 46 des Deckels 8 in Fahrzeuglängsrichtung fortgesetzt, wobei die Seitenränder 46 wiederum in die hinteren Dachholme 14 übergehen.

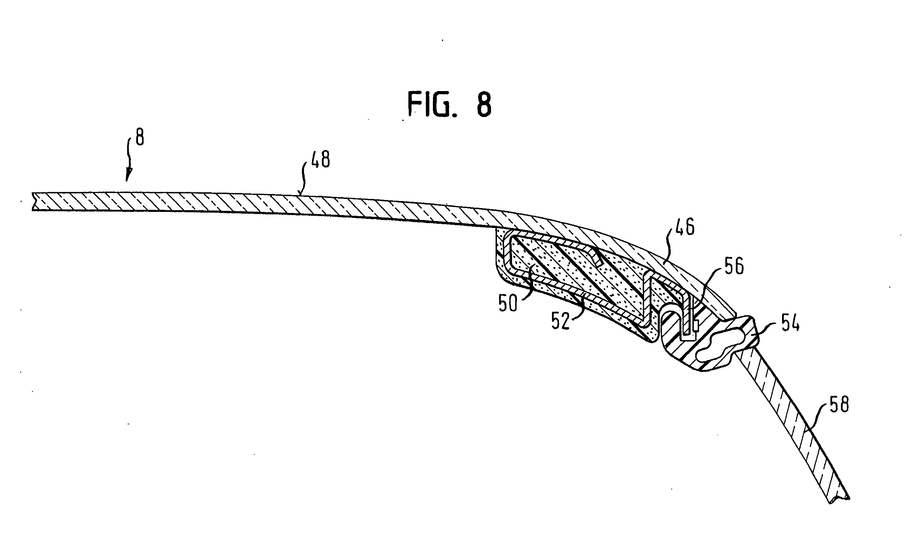

Der Deckel 8 ist ein sandwichartiges Verbundbauteil, dessen Aufbau insbesondere Figur 8 gut zu entnehmen ist. Die Außenhaut wird durch eine gekrümmte Außenwand 48 aus Kunststoff oder Glas gebildet. Im Bereich der Seitenränder 46, das heißt der seitlichen Längsränder und in Fortsetzung der Dachholme 12, 14, ist die Außenwand 48 hinterschäumt oder hinterspritzt. Mit dem Bezugszeichen 50 ist der Kunststoff bezeichnet, der beim Hinterschäumen oder Hinterspritzen bleibend an der Unterseite der Außenwand 48 angebracht wird. In diesen wulstartigen Abschnitt aus Kunststoff 50 ist eine Verstärkungseinlage, auch deckelseitiger Holm 52 genannt, eingebettet. Dieser deckelseitige Holm 52 besteht aus einem abgewinkelten Metallblech. Der deckelseitige Holm 52 stellt somit in geschlossenem Zustand des Dachs eine kräftemäßige Verbindung zwischen dem vorderen und dem hinteren Dachholm 12, 14 auf jeder Seite des Deckels 8 dar. Über die Verriegelungen 30 ergibt sich ein unmittelbarer Kraftschluß zwischen den Holmen 12, 14, 52. In anderen Worten: der eigentlich vorgesehene Dachholm wird abschnittsweise in den Deckel 8 verlegt.

Der Deckel 8 besitzt eine kederartige Dichtung 54, die teilweise hohl ist und die an einem freien Rand 56 des Metallblechs klemmt. Die Dichtung 54 ist bereits die Dichtung für die Seitenscheibe 58, die unmittelbar an der Dichtung 54 anliegt (siehe Figur 8), da die Seitentüren rahmenlos ausgeführt sind.

Zu betonen ist, daß die Ausführungsform des Deckels 8 mit den integrierten deckelseitigen Holmen 52 besonders vorteilhaft mit den vier Verriegelungen 30 und dem abnehmbaren Mittelholm 18 koppelbar ist, daß jedoch diese Einzelmerkmale auch für sich besonders vorteilhaft sind und gegebenenfalls auch mit anders ausgeführten Konstruktionen verwirklichbar wären.

## Patentansprüche

1. Öffnungsfähiges Fahrzeugdach, mit
wenigstens einem wahlweise verfahrbaren Deckel (8) zum wahlweisen Öffnen und Schließen einer Dachöffnung (24),
einem in Fahrzeugmitte verlaufenden, die Dachöffnung (24) in zwei Hälften teilenden Mittelholm (18) mit einem Antrieb (20) für den Deckel (8),
**dadurch gekennzeichnet, daß**
an den in Fahrzeuglängsrichtung gesehenen Seitenrändern (46) des Deckels (8) seitliche Fahrzeugdachholme (12, 14) fortsetzende, den Deckel (8) verstärkende Holme (52) angebracht sind.

2. Fahrzeugdach nach Anspruch 1, **dadurch gekennzeichnet, daß** es seitlich des Deckels (8) keinen Dachholm hat.

3. Fahrzeugdach nach Anspruch 1 oder 2, **dadurch gekennzeichnet, daß** der Deckel (8) seitliche, an den Seitenrändern (46) vorgesehene Dichtungen (54) hat.

4. Fahrzeugdach nach Anspruch 3, **dadurch gekennzeichnet, daß** die Seitentüren im oberen Bereich rahmenlos sind und die Seitenscheiben (58) unmittelbar am Deckel (8) anliegen.

5. Fahrzeugdach nach einem der vorhergehenden Ansprüche, **dadurch gekennzeichnet, daß** der Deckel (8) eine die Dachhaut ergänzende, flächige Außenwand (48) besitzt, die im Bereich der Seitenränder (46) hinterschäumt oder hinterspritzt ist.

6. Fahrzeugdach nach einem der vorhergehenden Ansprüche **dadurch gekennzeichnet, daß** die am Deckel (8) vorgesehenen Holme (52) aus Metall sind.

7. Fahrzeugdach nach Anspruch 6, **dadurch gekennzeichnet, daß** die am Deckel (8) vorgesehenen Holme (52) abgewinkelte Metallbleche sind.

8. Fahrzeugdach nach einem der vorhergehenden Ansprüche, **dadurch gekennzeichnet, daß** die am Deckel (8) vorgesehenen Holme (52) in eine Hinterschäumung/Hinterspritzung eingebettet sind.

9. Fahrzeugdach nach einem der vorhergehenden Ansprüche, **dadurch gekennzeichnet, daß** der Deckel (8) als werkzeuglos abnehmbare Einheit ausgebildet ist.

10. Fahrzeugdach nach einem der Ansprüche 1 bis 8, **dadurch gekennzeichnet, daß** der Deckel (8) und der Mittelholm (18) als gemeinsame, werkzeuglos abnehmbare Einheit ausgebildet sind.

11. Fahrzeugdach nach einem der vorhergehenden Ansprüche, **dadurch gekennzeichnet, daß** an den vier Ecken des Deckels (8) Verriegelungen (30) mit einem ortsfesten Abschnitt (6, 10) des Fahrzeugdachs vorgesehen sind.

12. Fahrzeugdach nach einem der vorhergehenden Ansprüche, **dadurch gekennzeichnet, daß** im Bereich der hinteren Ecken des Deckels (8) seitliche Führungen zur Koppelung der Ecken mit einem ortsfesten Abschnitt (10) des Fahrzeugdachs vorgesehen sind.

13. Fahrzeugdach nach Anspruch 12, **dadurch gekennzeichnet, daß** die Führungen zum werkzeugfreien Entfernen des Deckels (8) entriegelbar ausgeführt sind.

14. Fahrzeugdach nach Anspruch 12 oder 13, **dadurch gekennzeichnet, daß** die Führungen in Schienen (28) laufende, ausstellbare Hebel (26) sind.

15. Fahrzeugdach nach einem der vorhergehenden Ansprüche, **dadurch gekennzeichnet, daß** der Deckel (8) ausstellbar und über einen sich in Fahrzeuglängsrichtung nach hinten an den Deckel (8) anschließenden ortsfesten Abschnitt (10) des Fahrzeugdachs verfahrbar ausgebildet ist.

16. Fahrzeugdach nach einem der vorhergehenden Ansprüche, **dadurch gekennzeichnet, daß** der Deckel (8), der Mittelholm (18), und ein sich in Fahrzeuglängsrichtung nach hinten an den Deckel (8) anschließender, ortsfester Abschnitt (10) des Fahrzeugdachs eine vormontierte Dachmoduleinheit bilden.
